# FASCICULE DE BREVET EUROPEEN

(11) **EP 2 514 136 B1**
(45) Date de publication et mention de la délivrance du brevet: **06.11.2013**
(21) Numéro de dépôt: 10799082.2
(22) Date de dépôt: 14.12.2010
(51) Int. Cl.: H04L 12/06, H04L 12/28

(54) **SYSTÈME POUR DISTRIBUER AU MOINS DES SIGNAUX DE RÉSEAU INFORMATIQUE LOCAL ET DES SIGNAUX D'UNE AUTRE NATURE**
SYSTEM ZUR VERTEILUNG VON ZUMINDEST LOKALEN DATENNETZSIGNALEN UND SIGNALEN ANDERER ART
SYSTEM FOR DISTRIBUTING AT LEAST LOCAL DATA NETWORK SIGNALS AND SIGNALS OF ONE OTHER TYPE

(30) Priorité: 14.12.2009 FR 0958958
(43) Date de publication de la demande: 24.10.2012
(73) Titulaire: Legrand France, 87000 Limoges (FR); Legrand SNC, 87000 Limoges (FR)
(72) Inventeur: VULCANO, Bruno, F-26800 Beauvallon (FR); BAGOT, Jérôme, F-38160 Saint-Marcellin (FR)
(74) Mandataire: Lepelletier-Beaufond, François
(86) Numéro de dépôt international: PCT/FR2010/000836
(87) Numéro de publication internationale: WO 2011/080412

(56) Documents cités:
- EP-A1- 1 471 749
- WO-A2-2004/012395
- US-A- 5 805 806
- US-A1- 2003 058 885

## Description

### DOMAINE DE L'INVENTION

L'invention a trait aux installations de distribution de signaux dans un bâtiment résidentiel voire tertiaire.

On notera que dans le présent document, ce sont les natures électriques des signaux dont il est question et non le contenu véhiculé par les signaux. Ainsi, des contenus de télévision ou de téléphonie qui sont distribués sous un protocole de réseau informatique (par exemple télévision ou téléphonie sous IP) par des signaux de réseau informatique local ne sont pas des signaux de télévision ou de téléphonie au sens du présent document, mais des signaux de réseau informatique local.

### ARRIERE PLAN TECHNOLOGIQUE

On sait qu'il est intéressant de pouvoir distribuer les signaux de téléphonie et/ou de télévision sur une paire de conducteurs torsadée disponible dans un câble servant par ailleurs à la distribution des signaux de réseau informatique local (en anglais: Local Area Network). Un tel câble comporte en général quatre paires de conducteurs torsadées.

On connaît déjà, notamment par la demande de brevet français 2 854 302 à laquelle correspond à la demande de brevet américain US 2005/0032418 et par la demande de brevet français 2 873 251, un système de distribution de signaux de réseau informatique local, de signaux de téléphonie et de signaux de télévision, avec les signaux de réseau informatique local qui sont distribués sur deux paires torsadées, les signaux de téléphonie sur une paire torsadée et les signaux de télévision sur la paire torsadée restante d'un câble conventionnel de réseau informatique local à quatre paires torsadées.

### OBJET DE L'INVENTION

L'invention vise à permettre de mettre en oeuvre de telles installations y compris dans le cas où le réseau informatique local nécessite l'utilisation de quatre paires de conducteurs torsadées, comme par exemple un réseau Gigabit Ethernet (1000 base T).

L'invention propose à cet effet un système pour distribuer au moins des signaux de réseau informatique local et des signaux d'une autre nature, lesquels signaux d'une autre nature sont soit des signaux de télévision soit des signaux de téléphonie, comportant :
- une première borne de connexion à deux points de raccordement, adaptée à recevoir un câble de distribution de dits signaux d'une autre nature ;
- plusieurs deuxièmes bornes de connexion à au moins huit points de raccordement, chacune adaptée à recevoir un câble de réseau informatique local ;
- un étage de traitement de dits signaux d'une autre nature, relié à ladite première borne de connexion ; et
- un étage de réseau informatique local, comportant pour chaque dite deuxième borne de connexion un port de connexion à au moins huit points de raccordement ;
   caractérisé en ce qu'il comporte en outre, pour chaque dite deuxième borne de connexion, un gestionnaire d'affectation automatique comportant des moyens de reconfiguration pour prendre sélectivement :
   - une première configuration de fonctionnement où lesdits huit points de raccordement de cette deuxième borne de connexion sont reliés au port correspondant dudit étage de réseau informatique local ; et
   - une deuxième configuration de fonctionnement où une première paire de deux points de raccordement, prédéterminés parmi lesdits huit points de raccordement de cette deuxième borne de connexion, est réservée pour surveiller l'éventuelle présence d'un appareil de réseau informatique local ; et où une deuxième paire de deux points de raccordement, prédéterminés parmi lesdits huit points de raccordement de cette deuxième borne de connexion et distincts des points de raccordement de la première paire, est reliée au dit étage de traitement de signaux d'une autre nature.

Ainsi, dans le système selon l'invention, les deuxièmes bornes de connexion, plutôt que d'avoir une configuration de fonctionnement unique, prennent automatiquement, suivant les conditions d'utilisation, l'une d'au moins deux configurations de fonctionnement parmi lesquelles la première configuration de fonctionnement susmentionnée si l'appareil de réseau informatique local branché à la deuxième borne de connexion concernée est du type nécessitant quatre paires de conducteurs torsadées, et la deuxième configuration de fonctionnement susmentionnée si aucun appareil de réseau informatique local n'est branché.

Le système selon l'invention offre ainsi l'avantage d'être automatiquement configuré en fonction des besoins, en permettant par exemple d'utiliser une même prise de réseau informatique local à certains moments pour un appareil de réseau informatique local et à un autre moment pour un appareil d'une autre nature (télévision ou téléphone).

Selon des caractéristiques préférées pour des raisons de simplicité et de commodité de mise en oeuvre, lesdits moyens de reconfiguration sont adaptés à faire prendre audit gestionnaire d'affectation une configuration de démarrage où ladite première paire de deux points de raccordement est réservée pour surveiller l'éventuelle présence d'un appareil de réseau informatique local.

De préférence, pour les mêmes raisons, ledit gestionnaire d'affectation comporte des premiers moyens de détection pour détecter, dans ladite configuration de démarrage et dans ladite deuxième configuration de fonctionnement, l'éventuelle présence d'un appareil de réseau informatique local.

De préférence, pour les mêmes raisons, lesdits premiers moyens de détection comportent :
- un organe de pilotage comportant un premier point de raccordement de détection relié à un premier point de raccordement de la première paire et comportant des moyens pour déterminer si une tension apparaît sur ledit premier point de raccordement de détection ; et
- une source de tension reliée, dans ladite configuration de démarrage et dans ladite deuxième configuration de fonctionnement, au second point de raccordement de ladite première paire.

Selon d'autres caractéristiques préférées, pour les mêmes raisons, ladite configuration de démarrage est distincte de ladite deuxième configuration de fonctionnement.

De préférence, pour les mêmes raisons, dans ladite configuration de démarrage, parmi lesdits huit points de raccordement, les six points de raccordements autres que ceux de ladite première paire sont reliés au port dudit étage de réseau informatique local.

Selon d'autres caractéristiques préférées, pour les mêmes raisons, ledit gestionnaire d'affectation comporte des deuxièmes moyens de détection pour détecter, dans ladite première configuration de fonctionnement, l'éventuelle présence de signaux de réseau informatique local ; et lesdits moyens de reconfiguration sont adaptés :
- à partir de la configuration de démarrage, à passer à la première configuration de fonctionnement si lesdits premiers moyens de détection déterminent la présence d'un appareil de réseau informatique local et sinon à passer à la deuxième configuration de fonctionnement ;
- à partir de la première configuration de fonctionnement, à rester dans la première configuration de fonctionnement si lesdits deuxièmes moyens de détection déterminent la présence de signaux de réseau informatique local et sinon à passer à la configuration de démarrage ; et
- à partir de la deuxième configuration de fonctionnement, à passer à la première configuration de fonctionnement si les premiers moyens de détection déterminent la présence d'un appareil de réseau informatique local et sinon rester dans la deuxième configuration de fonctionnement.

De préférence, pour les mêmes raisons, lesdits deuxièmes moyens de détection comportent un organe de pilotage comportant un deuxième point de raccordement de détection relié à un point de raccordement de signalisation dudit étage de réseau informatique local et comportant des moyens pour déterminer si un signal de présence de signaux de réseau informatique local apparaît sur ledit deuxième point de raccordement de détection.

Selon d'autres caractéristiques préférées, pour les mêmes raisons, lesdits moyens de reconfiguration comportent au moins trois sélecteurs et un organe de pilotage desdits sélecteurs, lesquels sélecteurs comportent chacun un premier point de raccordement, un deuxième point de raccordement et un troisième point de raccordement, admettent chacun une première position dans laquelle le premier point de raccordement et le troisième point de raccordement sont reliés l'un à l'autre tandis que le deuxième point de raccordement et le troisième point de raccordement sont isolés, et admettent une deuxième position dans laquelle le deuxième point de raccordement et le troisième point de raccordement sont reliés l'un à l'autre tandis que le premier point de raccordement et le troisième point de raccordement sont isolés l'un de l'autre, avec :
- une liaison permanente entre un premier point de raccordement de la première paire et le point de raccordement correspondant du port dudit étage du réseau informatique local ;
- pour un premier dit sélecteur, le troisième point de raccordement qui est relié au second point de raccordement de ladite première paire, le deuxième point de raccordement qui est relié au point de raccordement correspondant du port dudit étage du réseau informatique local et le premier point de raccordement qui est relié à une source de tension ; et
- pour un deuxième et un troisième dit sélecteur, le troisième point de raccordement qui est relié à un respectif des points de raccordement de la deuxième paire, le deuxième point de raccordement qui est relié à un point de raccordement correspondant du port dudit étage du réseau informatique local et le premier point de raccordement qui est relié audit étage de traitement de signaux d'une autre nature ;
   avec ledit organe de pilotage qui :
   - dans la configuration de démarrage, met le premier sélecteur dans ladite première position et met les deuxième et troisième sélecteurs dans la deuxième position ;
   - dans la première configuration de fonctionnement, met les premier, deuxième et troisième sélecteurs dans la deuxième position ; et
   - dans la deuxième configuration de fonctionnement, met les premier, deuxième et troisième sélecteurs dans la première position.

Selon d'autres caractéristiques préférées, pour les mêmes raisons, lesdits signaux d'une autre nature sont des signaux de télévision et, pour distribuer en outre des signaux de téléphonie, le système comporte une troisième borne de connexion à deux points de raccordement, adaptée à recevoir un câble de distribution de la téléphonie et un étage de téléphonie, avec dans la deuxième configuration de fonctionnement une troisième paire de deux points de raccordement, prédéterminés parmi lesdits huit points de raccordement et distincts des points de raccordement de la première paire et de la deuxième paire, qui est reliée audit étage de téléphonie.

De préférence, pour les mêmes raisons, lesdits moyens de reconfiguration sont adaptés à faire prendre audit gestionnaire d'affectation une configuration de démarrage où ladite première paire de deux points de raccordement est réservée pour surveiller l'éventuelle présence d'un appareil de réseau informatique local ; et lesdits moyens de reconfiguration comportent au moins cinq sélecteurs et un organe de pilotage desdits sélecteurs, lesquels sélecteurs comportent chacun un premier point de raccordement, un deuxième point de raccordement et un troisième point de raccordement, admettent chacun une première position dans laquelle le premier point de raccordement et le troisième point de raccordement sont reliés l'un à l'autre tandis que le deuxième point de raccordement et le troisième point de raccordement sont isolés, et admettent une deuxième position dans laquelle le deuxième point de raccordement et le troisième point de raccordement sont reliés l'un à l'autre tandis que le premier point de raccordement et le troisième point de raccordement sont isolés l'un de l'autre, avec :
- une liaison permanente entre un premier point de raccordement de la première paire et le point de raccordement correspondant du port dudit étage du réseau informatique local ;
- pour un premier dit sélecteur, le troisième point de raccordement qui est relié au second point de raccordement de ladite première paire, le deuxième point de raccordement qui est relié au point de raccordement correspondant du port dudit étage du réseau informatique local et le premier point de raccordement qui est relié à une source de tension ;
- pour un deuxième et un troisième dit sélecteur, le troisième point de raccordement qui est relié à un respectif des points de raccordement de la deuxième paire, le deuxième point de raccordement qui est relié à un point de raccordement correspondant du port dudit étage du réseau informatique local et le premier point de raccordement qui est relié audit étage de traitement de signaux télévision ; et
- pour un quatrième et un cinquième dit sélecteur, le troisième point de raccordement qui est relié à un respectif des points de raccordement de la troisième paire, le deuxième point de raccordement qui est relié à un point de raccordement correspondant du port dudit étage du réseau informatique local et le premier point de raccordement qui est relié audit étage de téléphonie ;
   avec ledit organe de pilotage qui :
   - dans la configuration de démarrage, met le premier sélecteur dans ladite première position et met les deuxième à cinquième sélecteurs dans la deuxième position ;
   - dans la première configuration de fonctionnement, met les premier à cinquième sélecteurs dans la deuxième position ; et
   - dans la deuxième configuration de fonctionnement, met les premier à cinquième sélecteurs dans la première position.

De préférence, pour les mêmes raisons, afin de distribuer en outre des signaux de contrôle commande du bâtiment, il comporte une quatrième borne de connexion à deux points de raccordement, adaptée à recevoir un câble de contrôle commande du bâtiment et un étage de contrôle commande du bâtiment, avec dans la deuxième configuration de fonctionnement une quatrième paire de deux points de raccordement, prédéterminés parmi lesdits huit points de raccordement et distincts des points de raccordement des première paire à troisième paire, qui est reliée audit étage de contrôle commande du bâtiment.

De préférence, pour les mêmes raisons, lesdits moyens de reconfiguration sont adaptés à faire prendre audit gestionnaire d'affectation une configuration de démarrage où ladite première paire de deux points de raccordement est réservée pour surveiller l'éventuelle présence d'un appareil de réseau informatique local ; et lesdits moyens de reconfiguration comportent sept sélecteurs et un organe de pilotage desdits sélecteurs, lesquels sélecteurs comportent chacun un premier point de raccordement, un deuxième point de raccordement et un troisième point de raccordement, admettent chacun une première position dans laquelle le premier point de raccordement et le troisième point de raccordement sont reliés l'un à l'autre tandis que le deuxième point de raccordement et le troisième point de raccordement sont isolés, et admettent une deuxième position dans laquelle le deuxième point de raccordement et le troisième point de raccordement sont reliés l'un à l'autre tandis que le premier point de raccordement et le troisième point de raccordement sont isolés l'un de l'autre, avec :
- une liaison permanente entre un premier point de raccordement de la première paire et le point de raccordement correspondant du port dudit étage du réseau informatique local ;
- pour un premier dit sélecteur, le troisième point de raccordement qui est relié au second point de raccordement de ladite première paire, le deuxième point de raccordement qui est relié au point de raccordement correspondant du port dudit étage du réseau informatique local et le premier point de raccordement qui est relié à une source de tension ;
- pour un deuxième et un troisième dit sélecteur, le troisième point de raccordement qui est relié à un respectif des points de raccordement de la deuxième paire, le deuxième point de raccordement qui est relié à un point de raccordement correspondant du port dudit étage du réseau informatique local et le premier point de raccordement qui est relié audit étage de traitement de signaux télévision ;
- pour un quatrième et un cinquième dit sélecteur, le troisième point de raccordement qui est relié à un respectif des points de raccordement de la troisième paire, le deuxième point de raccordement qui est relié à un point de raccordement correspondant du port dudit étage du réseau informatique local et le premier point de raccordement qui est relié audit étage de téléphonie ;
- pour un cinquième et un sixième dit sélecteur, le troisième point de raccordement qui est relié à un respectif des points de raccordement de la quatrième paire, le deuxième point de raccordement qui est relié à un point de raccordement correspondant du port dudit étage du réseau informatique local et le premier point de raccordement qui est relié audit étage de contrôle commande du bâtiment ;
   avec ledit organe de pilotage qui :
   - dans la configuration de démarrage, met le premier sélecteur dans ladite première position et met les deuxième à septième sélecteurs dans la deuxième position ;
   - dans la première configuration de fonctionnement, met les premier à septième sélecteurs dans la deuxième position ; et
   - dans la deuxième configuration de fonctionnement, met les premier à septième sélecteurs dans la première position.

Selon d'autres caractéristiques préférées, pour les mêmes raisons, lesdits moyens de reconfiguration sont adaptés à faire prendre audit gestionnaire d'affectation une troisième configuration de fonctionnement où la première paire de deux points de raccordement est reliée au port correspondant dudit étage de réseau informatique local, la deuxième paire de deux points de raccordement est reliée audit étage de traitement de signaux d'une autre nature, et une troisième paire de deux points de raccordement, prédéterminés parmi lesdits huit points de raccordement et distincts des points de raccordement de la première paire et de la deuxième paire, est reliée au port correspondant dudit étage de réseau informatique local.

De préférence, pour les mêmes raisons, lesdits deuxièmes moyens de détection sont adaptés, en outre de détecter, dans ladite première configuration de fonctionnement, l'éventuelle présence de signaux de réseau informatique local, à déterminer, en cas de présence de tels signaux, s'ils sont d'une première ou d'une seconde nature ; et lesdits moyens de reconfiguration sont adaptés, à partir de la première configuration de fonctionnement, à rester dans la première configuration de fonctionnement si lesdits deuxièmes moyens de détection déterminent la présence de signaux de réseau informatique local de la première nature et à passer à la troisième configuration de fonctionnement si lesdits deuxièmes moyens de déterminent la présence de signaux de réseau informatique local de la seconde nature.

### BREVE DESCRIPTION DES DESSINS

L'exposé de l'invention sera maintenant poursuivi par la description détaillée d'exemples préférés de réalisation, donnée ci-après à titre illustratif et non limitatif, en référence aux dessins annexés, sur lesquels :
- la figure 1 est une représentation schématique d'une installation de distribution de signaux comportant un système conforme à l'invention ;
- la figure 2 est un schéma indiquant la nature des signaux présents sur chacune des quatre paires de contacts de l'une des prises que comporte cette installation, dans le cas où un appareil de réseau informatique local est branché sur cette prise ;
- la figure 3 est un schéma semblable dans le cas où aucun appareil de réseau informatique local n'est branché sur cette prise ;
- la figure 4 est une représentation schématique partielle du système conforme à l'invention, plus détaillée que la figure 1 ;
- la figure 5 est un schéma montrant l'un des ports de l'étage de réseau informatique local ;
- la figure 6 est un organigramme illustrant le fonctionnement de l'organe de pilotage que comporte chaque gestionnaire d'affectation de l'étage de sortie ;
- la figure 7 est un schéma semblable à celui des figures 2 et 3 pour une variante du système selon l'invention, dans le cas où l'appareil de réseau informatique local est d'une nature ne nécessitant que deux paires de conducteurs ;
- la figure 8 est une représentation schématique partielle montrant l'un des organes de pilotage que comporte cette variante du système et la partie de l'étage de réseau informatique local à laquelle est relié l'organe de pilotage illustré ; et
- la figure 9 est une portion d'organigramme illustrant le fonctionnement de l'organe de pilotage que comporte chaque gestionnaire d'affectation dans cette variante du système selon l'invention.

### DESCRIPTION DETAILLEE D'UN EXEMPLE DE REALISATION

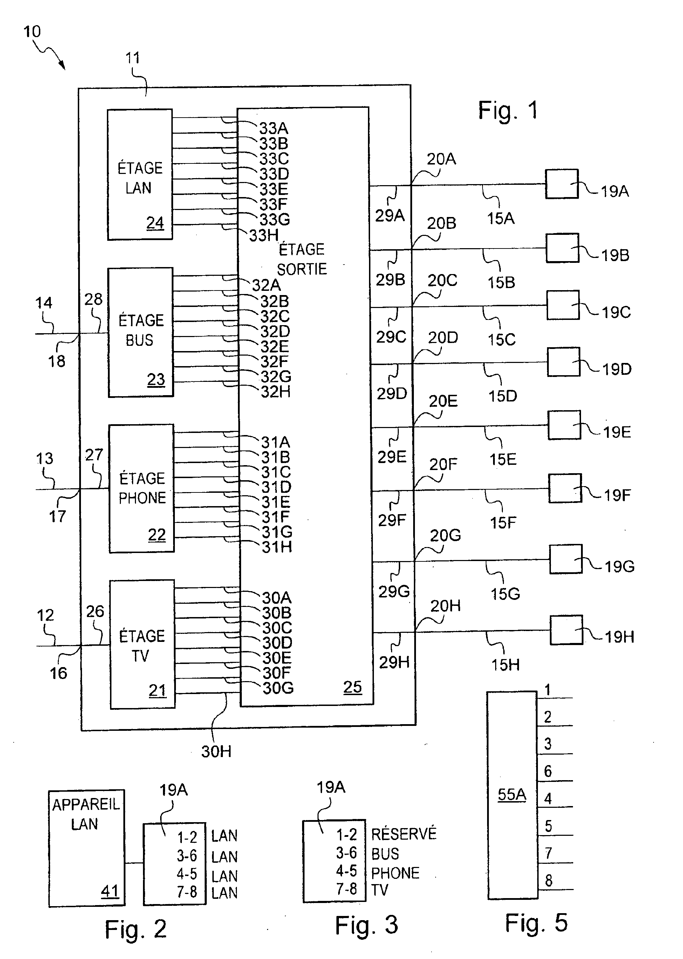

L'installation 10 de distribution de signaux illustrée sur la figure 1 comporte un système 11 auquel aboutissent un câble 12 de distribution de signaux de télévision, un câble 13 de raccordement à un réseau téléphonique, un câble 14 de raccordement à un réseau de contrôle commande du bâtiment et huit câbles 15A à 15H de réseau informatique local.

L'installation 10 fait partie d'un bâtiment résidentiel ou tertiaire, avec ici le système 11 qui est disposé dans le local technique de ce bâtiment.

Le câble 12 est coaxial. Il est ici relié à un réseau de distribution de signaux de télévision. Pour recevoir le câble 12, le système 11 présente une borne de connexion 16.

Le câble 13 comporte une paire de conducteurs reliée à un central de l'opérateur de téléphonie, lequel fournit une ligne sur cette paire. Pour recevoir le câble 13, le système 11 comporte une borne de connexion 17.

Le câble 14 comporte une paire de conducteurs reliée à un réseau de contrôle commande du bâtiment. Pour recevoir le câble 14, le système 11 comporte une borne de connexion 18.

Les câbles 15A à 15H de réseau informatique local sont chacun du type conventionnel à quatre paires de conducteurs torsadées, ici en catégorie 6. Ces câbles cheminent chacun, dans le bâtiment auquel appartient l'installation 10, entre le système 11 et une respective des prises 19A à 19H, ici du type RJ 45 de catégorie 6.

Pour recevoir les câbles 15A à 15H, le système 11 présente pour chacun de ces câbles une borne respective de connexion 20A à 20H. Chacun des câbles 15A à 15H est prévu pour distribuer non seulement les signaux de réseau informatique local, mais aussi les signaux de téléphonie, les signaux de télévision et les signaux de contrôle commande du bâtiment.

On notera que, comme indiqué ci-dessus, dans le présent document, ce sont les natures électriques des signaux dont il est question et non le contenu véhiculé par les signaux.

Ici, les signaux de télévision sont des signaux radiofréquences terrestres, par câble ou par satellite ; et les signaux de téléphonie sont des signaux analogiques (réseau téléphonique commuté RTC) ou numériques (réseau numérique à intégration de services RNIS).

Dans l'exemple illustré, la borne 16 est formée par une prise coaxiale type F, la borne 17 par un bornier ayant deux points de raccordement à vis, la borne 18 par un bornier ayant deux points de raccordement à vis et chacune des bornes 20A à 20H par une prise RJ 45 de catégorie 6.

Les figures 2 et 3 montrent quels sont les signaux présents sur les contacts de la prise 19A, étant entendu que cela vaut également pour les contacts des prises 19B à 19H, pour les conducteurs des câbles 15A à 15H et pour les points de raccordement des bornes 20A à 20H.

La figure 2 montre les signaux présents lorsqu'un appareil LAN 41 de réseau informatique local est branché sur la prise 19A. Dans ce cas, chacune des paires de contact de pôles 1 et 2, 3 et 6, 4 et 5 ainsi que 7 et 8 distribue les signaux de réseau informatique local LAN.

On notera que le système selon l'invention permet ainsi de disposer des huit conducteurs du câble 15A pour l'appareil de réseau informatique local branché sur la prise 19A. La mise à disposition des huit conducteurs est nécessaire à un réseau informatique local à haut débit, par exemple du type Gigabit Ethernet (1000 base T).

La figure 3 montre les signaux présents lorsqu'aucun appareil de réseau informatique local n'est branché sur la prise 19A. Dans ce cas, la paire de contacts de pôles 1 et 2 est réservée pour surveiller l'éventuel branchement d'un appareil de réseau informatique local, la paire de contacts de pôles 3 et 6 distribue les signaux de contrôle commande du bâtiment BUS, la paire de contacts de pôles 4 et 5 distribue les signaux de téléphonie PHONE et la paire de contacts de pôles 7 et 8 distribue les signaux de télévision TV.

Les contacts pour les signaux de réseau informatique local et de téléphonie étant disposés de façon normalisée, l'utilisateur branche classiquement sur l'une des prises 19A à 19H un appareil de téléphonie ou un appareil de réseau informatique local.

Pour raccorder un appareil de télévision, un adaptateur est branché sur l'une des prises 19A à 19H et un câble coaxial est branché entre l'adaptateur et l'appareil de télévision.

En variante, le câble coaxial et l'adaptateur sont réunis dans un même cordon.

Cet adaptateur comporte un symétriseur-asymétriseur (en anglais : balun) pour transformer le signal symétrique présent sur la paire de conducteurs torsadée aboutissant aux contacts 7 et 8 de l'une des prises 19A à 19H en un signal asymétrique pouvant être véhiculé par le câble coaxial, cette conversion étant réversible, c'est-à-dire que le symétriseur-asymétriseur est également capable de transformer un signal asymétrique présent sur le câble coaxial, et notamment un signal émis par un modem branché à ce câble, en un signal symétrique pouvant être véhiculé par la paire de conducteurs torsadée aboutissant aux contacts 7 et 8.

Pour raccorder un appareil prévu pour appartenir à un réseau de contrôle commande du bâtiment, un cordon approprié est branché sur l'une des prises 19A à 19H.

Les signaux de téléphonie, de télévision et de contrôle commande du bâtiment étant présents simultanément, il est possible, en utilisant une interface de connexion appropriée, par exemple un tripleur de prise, de brancher simultanément un appareil de téléphonie, un appareil de télévision et un appareil pour réseau de contrôle commande du bâtiment.

Pour que soient présents soit les signaux de réseau informatique local, soit l'ensemble formé par les signaux de télévision, les signaux de contrôle commande du bâtiment et les signaux de téléphonie sur les paires de conducteurs torsadées des câbles 15A à 15H, le système 11 comporte un étage TV 21 de traitement de signaux de télévision, un étage PHONE 22 de téléphonie, un étage BUS 23 de contrôle commande du bâtiment, un étage LAN 24 de réseau informatique local et un étage de sortie 25.

La borne 16 est reliée à l'étage 21 par un jeu de conducteurs 26, la borne 17 est relié à l'étage 22 par un jeu de conducteurs 27, la borne 18 est relié à l'étage 23 par un jeu de conducteurs 28 et chacune des bornes 20A à 20H est reliée à l'étage 25 par un jeu de conducteurs respectifs 29A à 29H.

L'étage 25 est relié à l'étage 21 par huit jeux de conducteurs 30A à 30H, à l'étage 22 par huit jeux de conducteurs 31A à 31 H, à l'étage 23 par huit jeux de conducteurs 32A à 32H et à l'étage 24 par huit jeux de conducteurs 33A à 33H.

Dans une variante non illustrée, l'étage 24 est relié à une borne supplémentaire du système 11 prévue pour être raccordée à un routeur que comporte un boîtier de fournisseur d'accès Internet (FAI).

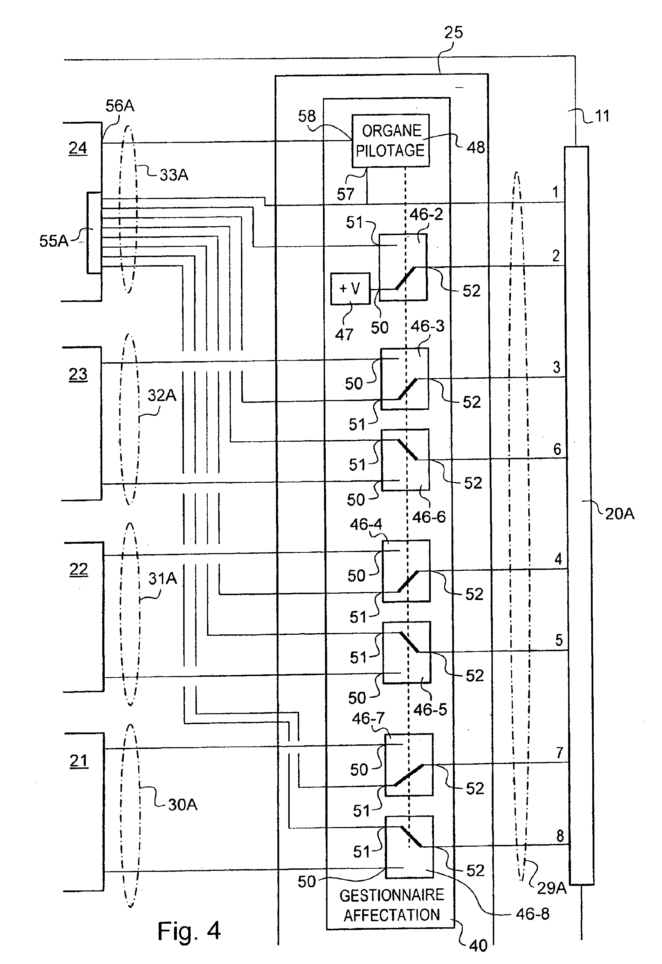

On va maintenant décrire en détail, à l'appui de la figure 4, le circuit existant entre la borne 20A et les étages 21 à 25, étant entendu que la description effectuée ci-après pour la borne 20A vaut également pour chacune des bornes 20B à 20H, à condition de remplacer le suffixe A par le suffixe qui suit le chiffre 20.

L'étage de sortie 25 comporte pour la borne 20A un gestionnaire d'affectation 40, lequel gestionnaire 40 comporte sept sélecteurs 46-2 à 46-8, une source de tension 47 et un organe 48 de pilotage des sélecteurs 46-2 à 46-8.

Chacun des sélecteurs 46-2 à 46-8 présente trois points de raccordement 50, 51 et 52.

Les sélecteurs 46-2 à 46-8 admettent chacun deux positions, respectivement une première position où le point de raccordement 50 est relié au point de raccordement 52 tandis que les points de raccordement 51 et 52 sont isolés l'un de l'autre (position illustrée sur la figure 4 pour le sélecteur 46-2), et une deuxième position où les points de raccordement 51 et 52 sont reliés l'un à l'autre tandis que les points de raccordement 50 et 52 sont isolés l'un de l'autre (position illustrée sur la figure 4 pour les sélecteurs 46-3 à 46-8).

Les points de raccordement 50 des sélecteurs 46-7 et 46-8 sont reliés à l'étage 21 par le jeu de deux conducteurs 30A.

L'étage 21 comporte un répartiteur-amplificateur non illustré relié au jeu de deux conducteurs 26 et, entre le répartiteur-amplificateur et chaque jeu de deux conducteurs 30A à 30H, un symétriseur-asymétriseur respectif. Lorsque l'étage 21 est prévu pour prendre en charge une voie de retour, le répartiteur-amplificateur est bidirectionnel et est associé à des filtres appropriés.

Les points de raccordement 50 des sélecteurs 46-4 et 46-5 sont reliés à l'étage 22 par le jeu de deux conducteurs 31A.

L'étage 22 comporte un dispositif non illustré de branchement en parallèle du jeu de deux conducteurs 27 et des huit jeux de deux conducteurs 31A à 31 H. En variante, l'étage 22 comporte en outre pour chacun des jeux de deux conducteurs 31A à 31 H un gestionnaire de court-circuits, par exemple tel que décrit dans la demande de brevet français 2 873 258, à laquelle correspond la demande de brevet américain US 2006/0029210.

Les points de raccordement 50 des sélecteurs 46-3 et 46-6 sont reliés à l'étage 23 par le jeu de deux conducteurs 32A.

L'étage 23 comporte un dispositif non illustré de branchement en parallèle du jeu de deux conducteurs 28 et de chacun des jeux de deux conducteurs 32A à 32H, le réseau de contrôle commande du bâtiment étant ici du type à intelligence répartie tel qu'un réseau Konnex ou un réseau à bus SCS commercialisé par le Groupe LEGRAND. En variante, le réseau de contrôle commande du bâtiment est d'un autre type, par exemple du type Dali et l'on prévoit alors dans l'étage 23 un concentrateur approprié.

Le point de raccordement 50 du sélecteur 46-2 est relié à une source de tension 47, qui est ici à un potentiel de + 5 volts par rapport au potentiel de référence.

L'étage 24 présente pour chacune des bornes 20A à 20H, un port respectif dont seul le port 55A est visible sur les dessins (figures 4 et 5).

La figure 5 montre quels sont les pôles des points de raccordement du port 55A, de la même façon que la figure 4 montre quels sont les pôles des points de raccordement de la borne 20A.

Le point de raccordement 51 du sélecteur 46-2 est relié au point de raccordement de pôle 2 du port 55A, le point de raccordement 51 du sélecteur 46-3 est relié au point de raccordement de pôle 3 du port 55A et ainsi de suite (en d'autres termes, le point de raccordement 51 du sélecteur 46-n est relié au point de raccordement de pôle n du port 55A, avec n qui varie de 2 à 8).

L'étage 24 présente également pour chaque port tel que 55A un point de raccordement de signalisation dont seul le point 56A est visible sur les dessins (figure 4).

Chaque point tel que 56A fournit un signal logique qui est à un premier état en présence de signaux de réseau informatique local sur le port correspondant (relation établie entre ce port et un appareil de réseau informatique local) et à un deuxième état en l'absence de tels signaux.

D'une façon générale, l'étage 24 est construit comme un switch Ethernet 10/100/1000 base T, autour d'un circuit intégré spécialisé, par exemple un circuit 6350R de la Société MARVEL.

Ce circuit intégré présente pour chaque port une sortie prévue pour alimenter ou non une diode électroluminescente pour indiquer si une relation est établie ou non entre ce port et un appareil de réseau informatique local. Ces sorties du circuit intégré sont directement connectées aux points de raccordement correspondants (56A pour le port 55A) de l'étage 24.

Le jeu de neuf conducteurs 33A comporte, en outre des sept conducteurs reliant le point de raccordement 51 des sélecteurs 46-2 à 46-8 à un respectif des points de raccordement de pôles 2 à 8 du port 55A, un conducteur reliant le point de raccordement de pôle 1 du port 55A à un point de raccordement de détection 57 de l'organe de pilotage 48 ainsi qu'un conducteur reliant le point de raccordement 56A de l'étage 24 à un point de raccordement de détection 58 de l'organe de pilotage 48.

Le point de raccordement 52 du sélecteur 46-2 est relié au point de raccordement de pôle 2 de la borne 20A, le point de raccordement 52 du sélecteur 46-3 est relié au point de raccordement de pôle 3 de la borne 20A et ainsi de suite (en d'autres termes, le point de raccordement 52 du sélecteur 46-n est relié au point de raccordement de pôle n de la borne 20A, avec n qui varie de 2 à 8).

Les liaisons entre les points de raccordement 52 et la borne 20A se font par sept des huit conducteurs du jeu 29A.

Le conducteur restant du jeu 29A relie le point de raccordement de pôle 1 de la borne 20A au point de raccordement de détection 57 de l'organe de pilotage 48 et donc au point de raccordement de pôle 1 du port 55A de l'étage 24.

L'organe de pilotage 48 sert à mettre les sélecteurs 46-2 à 46-8 dans l'une ou l'autre de leur première position et deuxième position en fonction des signaux présents sur les bornes 57 et 58.

L'organe de pilotage 48 est par exemple construit à partir d'un microcontrôleur.

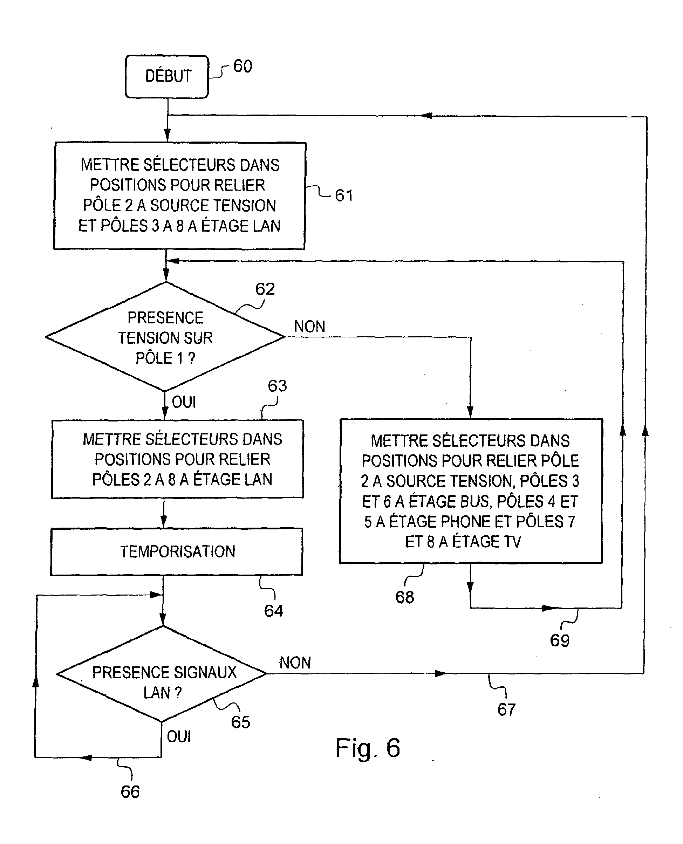

On va maintenant décrire le fonctionnement de l'organe de pilotage 48 à l'appui de la figure 6.

Au démarrage, après une étape d'initialisation DÉBUT 60, l'organe 48, dans une étape 61, met les sélecteurs 46-2 à 46-8 dans les positions où le point de raccordement de pôle 2 de la borne 20A est relié à la source de tension 47 (sélecteur 46-2 dans la première position susmentionnée) tandis que les sélecteurs 46-3 à 46-8 relient les points de raccordement de pôles 3 à 8 aux points de raccordement correspondants du port 55A (sélecteurs 46-3 à 46-8 dans la deuxième position susmentionnée).

Les sélecteurs 46-2 à 46-8 sont alors dans les positions illustrées sur la figure 4.

Si un appareil de réseau informatique local, tel que l'appareil 41 illustré sur la figure 2, est branché sur la prise 19A, alors le symétriseur-asymétriseur que comporte cet appareil entre le contact de pôle 1 et le contact de pôle 2 permet à la tension injectée sur le pôle 2 par la source 47 d'être présente sur le pôle 1, et donc sur le point de raccordement 57 de l'organe de pilotage 48.

Dans une étape de test 62, l'organe de pilotage 48 détermine si cette tension est ou non présente sur le point de raccordement 57.

Si la réponse est oui (présence de tension et donc présence d'un appareil de réseau informatique local), l'organe de pilotage 48 passe à une étape 63 dans laquelle il met les sélecteurs 46-2 à 46-8 dans les positions où les points de raccordement de pôles 2 à 8 de la borne 20A sont reliés à l'étage 24.

En pratique, le sélecteur 46-2 passe de la première position (illustrée sur la figure 4, dans laquelle il avait été mis à l'étape 61) à la deuxième position, tandis que les sélecteurs 46-3 à 46-8 restent dans la deuxième position (illustrée sur la figure 4, dans laquelle ils avaient été mis à l'étape 61).

On observera que l'étape 63 met la borne 20A dans une configuration correspondant à la configuration de la prise 19A illustrée sur la figure 2.

L'organe 48 met ensuite en oeuvre une étape de temporisation 64 où il attend, pendant une durée prédéterminée suffisamment longue pour que si l'appareil de réseau informatique local tel que 41 branché à la prise 19A est en fonctionnement, la relation ait pu s'établir entre cet appareil et l'étage 24.

En pratique, la durée de l'étape de temporisation est par exemple de 100 ms.

L'organe de pilotage 48 met ensuite en oeuvre une étape de test 65 pour déterminer si l'on est ou non en présence de signaux de réseau informatique local, c'est-à-dire si une mise en relation a pu être établie entre le port 55A de l'étage 24 et un appareil de réseau informatique local tel que l'appareil 41.

En pratique, ce test est effectué en fonction de l'état logique du signal présent sur le point de raccordement 58 de l'organe 48. Si la réponse est oui (relation établie), l'organe de pilotage 48 effectue une boucle 66 dans laquelle il renouvelle itérativement l'opération de test 65.

Ainsi, tant qu'il y a présence de signaux de réseau informatique local, la prise 19A reste dans la configuration illustrée sur la figure 2.

Si la réponse à l'étape de test 65 est non (absence de relation établie entre l'étage 24 et l'appareil de réseau informatique local branché sur la prise 19A), que ce soit directement après l'étape de temporisation 64 (appareil de réseau informatique local à l'arrêt) ou en sortie de la boucle 66 (appareil de réseau informatique local passant du fonctionnement à l'arrêt), l'organe de pilotage 48 revient à l'étape 61.

On notera que tant que l'appareil de réseau informatique local branché sur la prise 19A reste à l'arrêt, l'organe de pilotage 48 met en oeuvre une boucle 67 comportant les opérations 61 à 65.

On vient de décrire quelles sont les opérations effectuées lorsque la réponse à l'étape de test 62 est oui.

Si la réponse à l'étape de test 62 est non (absence de tension sur le point de raccordement 57 et donc sur le pôle 1), l'organe de pilotage 48 passe à une étape 68 dans laquelle il met les sélecteurs 46-2 à 46-8 dans les positions où le point de raccordement de pôle 2 de la borne 20A est relié à la source de tension 47, les points de raccordement de pôles 3 et 6 sont reliés à l'étage 23, les points de raccordement de pôles 4 et 5 sont reliés à l'étage 22 et les points de raccordement de pôles 7 et 8 sont reliés à l'étage 21.

En pratique, le sélecteur 46-2 reste dans la première position (illustrée sur la figure 4, dans laquelle il avait été mis à l'étape 61) tandis que les sélecteurs 46-3 à 46-8 passent de la deuxième position (illustrée sur la figure 4, dans laquelle ils avaient été mis à l'étape 61) à la première position.

On observera que les sélecteurs 46-2 à 46-8 font alors prendre à la borne 20A une configuration correspondant à la configuration de la prise 19A illustrée sur la figure 3.

Après l'étape 68, l'organe 48 renouvelle l'étape de test 62.

Ainsi, tant qu'il y a absence de tension à la borne 57 (aucun appareil de réseau informatique local tel que 41 branché sur la prise 19A), la prise 19A reste dans la configuration illustrée sur la figure 3, l'organe de pilotage 48 mettant en oeuvre une boucle 69 comportant les opérations 62 et 68.

La sortie de la boucle s'effectue si un appareil de réseau informatique local tel que 41 est branché sur la prise 19A.

Comme indiqué ci-dessus, si un appareil de réseau informatique local tel que 41 est branché sur la prise 19A en étant à l'arrêt, l'organe de pilotage 48 met en oeuvre une boucle 67 comportant les opérations 61 à 65.

La sortie de la boucle 67 s'effectue soit lorsque l'appareil de réseau informatique local branché à la prise 19A est mis en marche : la réponse à l'étape de test 65 devient oui et c'est alors la boucle 66 (maintien de configuration de la figure 2 prise à l'étape 63) qui est mise en oeuvre, soit parce que l'appareil de réseau informatique local est débranché et c'est alors la boucle 69 (maintien de la configuration de la figure 3 prise à l'étape 68) qui est mise en oeuvre.

Ainsi, le gestionnaire d'affectation 40 admet ici trois configurations différentes, respectivement une configuration de démarrage (configuration prise à l'étape 61) et deux configurations de fonctionnement, sélectionnées suivant qu'est présent ou non un appareil de réseau informatique local (configuration prise respectivement à l'étape 63 et à l'étape 68).

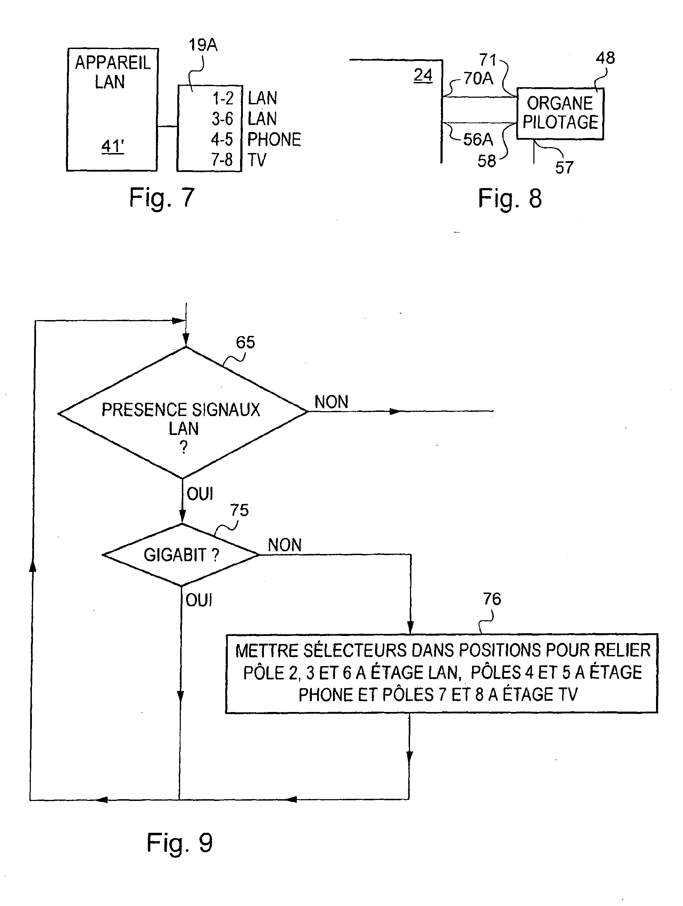

On va maintenant décrire à l'appui des figures 7 à 9 une variante du système selon l'invention dans laquelle chaque gestionnaire d'affectation 40, en cas de présence d'un appareil de réseau informatique local, est soit dans la configuration correspondant à la figure 2 (configuration prise à l'étape 63) soit dans la configuration correspondant à la figure 7, suivant respectivement que cet appareil de réseau informatique local nécessite quatre paires de conducteurs, comme l'appareil 41 de la figure 2, et deux paires de conducteurs, comme l'appareil 41' de la figure 7.

Dans ce dernier cas, les paires de contacts de pôles 1 et 2 ainsi que 3 et 6 distribuent les signaux de réseau informatique LAN, la paire de contacts de pôles 4 et 5 distribue les signaux de téléphonie PHONE et la paire de contacts de pôles 7 et 8 distribue les signaux de télévision TV.

Dans cette variante, l'étage 24 de réseau informatique local comporte non seulement le point de raccordement de signalisation 56A mais aussi un point de raccordement de signalisation supplémentaire 70A relié à un point de raccordement de détection 71 de l'organe de pilotage 48.

Bien entendu, l'étage 24 présente un point de raccordement tel que 70A pour chacune des bornes 20A à 20H.

Chaque point tel que 70A fournit un signal logique qui est à un premier état lorsque les signaux de réseau informatique local présents sur le port correspondant révèlent que l'appareil de réseau informatique local est d'une nature nécessitant quatre paires de conducteurs, et qui est à un deuxième état lorsque les signaux de réseau informatique local présents sur le port correspondant révèlent que l'appareil est d'une nature nécessitant deux paires de conducteurs.

Ainsi, en fonction de l'état du signal présent sur le point de raccordement 71, l'organe de pilotage 48 peut savoir si l'appareil de réseau informatique local dont sont issus les signaux de réseaux informatique local, est de la première nature ou de la deuxième nature.

Dans l'exemple illustré, la première nature d'appareil est du type 1000 base T (Gigabit) et la deuxième nature d'appareil est du type 10/100 base T.

Le circuit intégré susmentionné présente pour chaque port une sortie prévue pour alimenter ou non une diode électroluminescente pour indiquer si l'appareil de réseau informatique local avec lequel une relation est établie est ou non du type 1000 base T (Gigabit). Ces sorties du circuit intégré sont directement connectées aux points de raccordement correspondant (70 A pour le port 55A) de l'étage 24.

Le fonctionnement de l'organe de pilotage 48 s'effectue selon un organigramme semblable à celui illustré sur la figure 6, si ce n'est qu'après l'étape de test 65, dans le cas où sont présents des signaux de réseau informatique local, plutôt que renouveler directement l'étape de test 65, il est effectué une étape de test 75 dans laquelle on détermine si l'appareil de réseau informatique local est de la première nature ou de la deuxième nature.

Dans le cas où il s'agit d'un appareil de la première nature (réponse oui à l'étape de test 75), on renouvelle directement l'étape de test 65.

Si l'appareil de réseau informatique local est de la seconde nature (réponse non à l'étape de test 75), l'organe de pilotage 48 passe à une étape 76 dans laquelle il met les sélecteurs 46-2 à 46-8 dans les positions où les points de raccordement de pôles 2, 3 et 6 sont reliés à l'étage 24 de réseau informatique local, les points de raccordement de pôles 4 et 5 sont reliés à l'étage à l'étage 22 de téléphonie et les points de raccordement de pôles 7 et 8 sont reliés à l'étage 21 de distribution de la télévision.

En pratique, les sélecteurs 46-2, 46-3 et 46-6 restent dans la deuxième position (dans laquelle ils avaient été mis à l'étape 61 ou 63) tandis que les sélecteurs 46-4, 46-5, 46-7 et 46-8 passent de la deuxième position (à laquelle ils avaient été mis à l'étape 61) à la première position.

Après l'étape 76, l'organe 48 renouvelle l'étape de test 65.

En pratique, l'étape de test 75 est effectuée en fonction de l'état logique du signal présent sur le point de raccordement 71.

Dans les exemples décrits ci-dessus, la configuration de démarrage (étape 61) est différente de la configuration de fonctionnement en l'absence d'appareil de réseau informatique local (étape 68) mais en variante, par exemple si l'on ne craint pas qu'un appareil de réseau informatique local provoque un court-circuit, la configuration de démarrage et cette deuxième configuration de fonctionnement sont identiques.

Dans des variantes non illustrées, le système tel que 11 ne comporte pas d'étage BUS tel que 23 voire ne comporte qu'un seul des étages 21 et 22, avec bien entendu les signaux de contrôle commande du bâtiment BUS qui ne sont pas distribués dans l'installation telle que 10 voire ne sont distribués en outre des signaux de réseau informatique local que seuls les signaux de téléphonie PHONE ou seuls les signaux de télévision TV.

Dans des variantes non illustrées, les bornes 16 à 18 et 20A à 20H sont d'un autre type, par exemple une prise type IEC 9,52 pour la borne 16 ; un bornier à deux points de raccordement à lame ressort pour chacune des bornes 17 et 18 ; et, pour chacune des bornes 20A à 20H, un bornier à points de raccordement autodénudants tel que décrit dans la demande de brevet français 2 815 775 ou dans la demande de brevet français 2 815 781.

Dans d'autres variantes non illustrées :
- le câble tel que 12 n'est pas relié à un réseau de distribution de signaux de télévision, mais directement à une antenne de réception ;
- les pôles 1 et 2 sont inversés, c'est-à-dire que c'est sur le pôle 1 qu'on injecte une tension et c'est sur le pôle 2 que l'on détecte la présence de cette tension ;
- la valeur de la tension de la source telle que 47 est différente de 5 volts, par exemple 3 volts ;
- la détection s'effectue autrement que par injection de tension, par exemple par injection de courant ;
- la détection s'effectue sur d'autres paires de conducteurs, par exemple la paire de pôles 3 et 6 ;
- il y a davantage que huit pôles dans les prises telles que 20A, par exemple 12 pôles ;
- les câbles tels que 15A à 15H et les prises telles que 19A à 19H sont d'une catégorie différente de la catégorie 6, par exemple la catégorie 5E ;
- les prises telles que 19A à 19H sont d'un type différent de RJ 45 ;
- les sélecteurs tels que 46-2 à 46-8 sont à davantage que deux positions, avec par exemple une troisième position pour que dans la phase d'initialisation telle que 60, les différents pôles des bornes de connexion telles que 20A à 20H soient en l'air ; et/ou
- le circuit intégré autour duquel est construit l'étage 24 de réseau informatique local est différent de celui susmentionné ; et la durée de l'étape de temporisation est différente de la durée de 100 ms susmentionnée, par exemple 85 ms ou 120 ms.

De nombreuses autres variantes sont possibles en fonction des circonstances, et l'on rappelle à cet égard que l'invention ne se limite pas aux exemples décrits et représentés.

## Revendications

1. Système pour distribuer au moins des signaux de réseau informatique local et des signaux d'une autre nature, lesquels signaux d'une autre nature sont soit des signaux de télévision soit des signaux de téléphonie, comportant :
- une première borne de connexion (16 ; 17) à deux points de raccordement, adaptée à recevoir un câble (12 ; 13) de distribution de dits signaux d'une autre nature ;
- plusieurs deuxièmes bornes de connexion (20A-20H) à au moins huit points de raccordement, chacune adaptée à recevoir un câble de réseau informatique local (15A-15H) ;
- un étage (21 ; 22) de traitement de dits signaux d'une autre nature, relié à ladite première borne de connexion (16 ; 17) ; et
- un étage (24) de réseau informatique local, comportant pour chaque dite deuxième borne de connexion (20A-20H) un port de connexion (55A) à au moins huit points de raccordement ;
**caractérisé en ce qu'**il comporte en outre, pour chaque dite deuxième borne de connexion (20A), un gestionnaire d'affectation (40) automatique comportant des moyens de reconfiguration (46-2 - 46-8, 48) pour prendre sélectivement :
- une première configuration de fonctionnement (63) où lesdits huit points de raccordement de cette deuxième borne de connexion (20A) sont reliés au port correspondant (55A) dudit étage (24) de réseau informatique local ; et
- une deuxième configuration de fonctionnement (68) où une première paire de deux points de raccordement, prédéterminés parmi lesdits huit points de raccordement de cette deuxième borne de connexion (20A), est réservée pour surveiller l'éventuelle présence d'un appareil de réseau informatique local (41) ; et où une deuxième paire de deux points de raccordement, prédéterminés parmi lesdits huit points de raccordement de cette deuxième borne de connexion (20A) et distincts des points de raccordement de la première paire, est reliée au dit étage (21 ; 22) de traitement de signaux d'une autre nature.

2. Système selon la revendication 1, **caractérisé en ce que** lesdits moyens de reconfiguration (46-2 - 46-8, 48) sont adaptés à faire prendre audit gestionnaire d'affectation (40) une configuration de démarrage (61) où ladite première paire de deux points de raccordement est réservée pour surveiller l'éventuelle présence d'un appareil de réseau informatique local (41).

3. Système selon la revendication 2, **caractérisé en ce que** ledit gestionnaire d'affectation (40) comporte des premiers moyens de détection (47, 48, 57, 62) pour détecter, dans ladite configuration de démarrage (61) et dans ladite deuxième configuration de fonctionnement (68), l'éventuelle présence d'un appareil de réseau informatique local (41).

4. Système selon la revendication 3, **caractérisé en ce que** lesdits premiers moyens de détection comportent :
- un organe de pilotage (48) comportant un premier point de raccordement de détection (57) relié à un premier point de raccordement de la première paire et comportant des moyens (62) pour déterminer si une tension apparaît sur ledit premier point de raccordement de détection (57) ; et
- une source de tension (47) reliée, dans ladite configuration de démarrage (61) et dans ladite deuxième configuration de fonctionnement (68), au second point de raccordement de ladite première paire.

5. Système selon l'une quelconque des revendications 2 à 4, **caractérisé en ce que** ladite configuration de démarrage (61) est distincte de ladite deuxième configuration de fonctionnement (68).

6. Système selon la revendication 5, **caractérisé en ce que** dans ladite configuration de démarrage (61), parmi lesdits huit points de raccordement, les six points de raccordements autres que ceux de ladite première paire sont reliés au port (55A) dudit étage (24) de réseau informatique local.

7. Système selon l'une quelconque des revendications 5 ou 6, **caractérisé en ce que** ledit gestionnaire d'affectation (40) comporte des deuxièmes moyens de détection (48, 58, 65) pour détecter, dans ladite première configuration de fonctionnement (63), l'éventuelle présence de signaux de réseau informatique local ; et **en ce que** lesdits moyens de reconfiguration (46-2 - 46-8, 48) sont adaptés :
- à partir de la configuration de démarrage (61), à passer à la première configuration de fonctionnement (63) si lesdits premiers moyens de détection (47, 48, 57, 62) déterminent la présence d'un appareil de réseau informatique local (41) et sinon à passer à la deuxième configuration de fonctionnement (68) ;
- à partir de la première configuration de fonctionnement (63), à rester dans la première configuration de fonctionnement (63) si lesdits deuxièmes moyens de détection (48, 58, 65) déterminent la présence de signaux de réseau informatique local et sinon à passer à la configuration de démarrage (61) ; et
- à partir de la deuxième configuration de fonctionnement (68), à passer à la première configuration de fonctionnement (63) si les premiers moyens de détection (47, 48, 57, 62) déterminent la présence d'un appareil de réseau informatique local (41) et sinon rester dans la deuxième configuration de fonctionnement (68).

8. Système selon la revendication 7, **caractérisé en ce que** lesdits deuxièmes moyens de détection comportent un organe de pilotage (48) comportant un deuxième point de raccordement de détection (58) relié à un point de raccordement de signalisation (56A) dudit étage de réseau informatique local (24) et comportant des moyens (65) pour déterminer si un signal de présence de signaux de réseau informatique local apparaît sur ledit deuxième point de raccordement de détection (58).

9. Système selon l'une quelconque des revendications 2 à 8, **caractérisé en ce que** lesdits moyens de reconfiguration comportent au moins trois sélecteurs (46-2 - 46-8) et un organe de pilotage (48) desdits sélecteurs, lesquels sélecteurs comportent chacun un premier point de raccordement (50), un deuxième point de raccordement (51) et un troisième point de raccordement (52), admettent chacun une première position dans laquelle le premier point de raccordement (50) et le troisième point de raccordement (52) sont reliés l'un à
l'autre tandis que le deuxième point de raccordement (51) et le troisième point de raccordement (52) sont isolés, et admettent une deuxième position dans laquelle le deuxième point de raccordement (51) et le troisième point de raccordement (52) sont reliés l'un à l'autre tandis que le premier point de raccordement (50) et le troisième point de raccordement (52) sont isolés l'un de l'autre, avec :
- une liaison permanente entre un premier point de raccordement de la première paire et le point de raccordement correspondant du port (55A) dudit étage (24) du réseau informatique local ;
- pour un premier dit sélecteur (46-2), le troisième point de raccordement (52) qui est relié au second point de raccordement de ladite première paire, le deuxième point de raccordement (51) qui est relié au point de raccordement correspondant du port (55A) dudit étage (24) du réseau informatique local et le premier point de raccordement (50) qui est relié à une source de tension (47) ; et
- pour un deuxième et un troisième dit sélecteur (46-4, 46-5 ; 46-7, 46-8), le troisième point de raccordement (52) qui est relié à un respectif des points de raccordement de la deuxième paire, le deuxième point de raccordement (51) qui est relié à un point de raccordement correspondant du port (55A) dudit étage (24) du réseau informatique local et le premier point de raccordement (50) qui est relié audit étage (21 ; 22) de traitement de signaux d'une autre nature ;
avec ledit organe de pilotage (48) qui :
- dans la configuration de démarrage (61), met le premier sélecteur (46-2) dans ladite première position et met les deuxième et troisième sélecteurs (46-4, 46-5 ; 46-7, 46-8) dans la deuxième position ;
- dans la première configuration de fonctionnement (63), met les premier, deuxième et troisième sélecteurs (46-2, 46-4, 46-5 ; 46-2, 46-7, 46-8) dans la deuxième position ; et
- dans la deuxième configuration de fonctionnement (68), met les premier, deuxième et troisième sélecteurs (46-2, 46-4, 46-5 ; 46-2, 46-7, 46-8) dans la première position.

10. Système selon l'une quelconque des revendications 1 à 9, **caractérisé en ce que** lesdits signaux d'une autre nature sont des signaux de télévision et **en ce que** pour distribuer en outre des signaux de téléphonie, il comporte une troisième borne de connexion (17) à deux points de raccordement, adaptée à recevoir un câble (13) de distribution de la téléphonie et un étage (22) de téléphonie, avec dans la deuxième configuration de fonctionnement (68) une troisième paire de deux points de raccordement, prédéterminés parmi lesdits huit points de raccordement et distincts des points de raccordement de la première paire et de la deuxième paire, qui est reliée audit étage (22) de téléphonie.

11. Système selon la revendication 10, **caractérisé en ce que** lesdits moyens de reconfiguration (46-2 - 46-8, 48) sont adaptés à faire prendre audit gestionnaire d'affectation (40) une configuration de démarrage (61) où ladite première paire de deux points de raccordement est réservée pour surveiller l'éventuelle présence d'un appareil de réseau informatique local (41) ; et **en ce que** lesdits moyens de reconfiguration (46-2 - 46-8, 48) comportent au moins cinq sélecteurs (46-2 - 46-8) et un organe de pilotage (48) desdits sélecteurs, lesquels sélecteurs comportent chacun un premier point de raccordement (50), un deuxième point de raccordement (51) et un troisième point de raccordement (52), admettent chacun une première position dans laquelle le premier point de raccordement (50) et le troisième point de raccordement (52) sont reliés l'un à l'autre tandis que le deuxième point de raccordement (51) et le troisième point de raccordement (52) sont isolés, et admettent une deuxième position dans laquelle le deuxième point de raccordement (51) et le troisième point de raccordement (52) sont reliés l'un à l'autre tandis que le premier point de raccordement (50) et le troisième point de raccordement (52) sont isolés l'un de l'autre, avec :
- une liaison permanente entre un premier point de raccordement de la première paire et le point de raccordement correspondant du port (55A) dudit étage (24) du réseau informatique local
- pour un premier dit sélecteur (46-2), le troisième point de raccordement (52) qui est relié au second point de raccordement de ladite première paire, le deuxième point de raccordement (51) qui est relié au point de raccordement correspondant du port (55A) dudit étage (24) du réseau informatique local et le premier point de raccordement (50) qui est relié à une source de tension (47) ;
- pour un deuxième et un troisième dit sélecteur (46-7, 46-8), le troisième point de raccordement (52) qui est relié à un respectif des points de raccordement de la deuxième paire, le deuxième point de raccordement (51) qui est relié à un point de raccordement correspondant du port (55A) dudit étage (24) du réseau informatique local et le premier point de raccordement (50) qui est relié audit étage (21) de traitement de signaux télévision ; et
- pour un quatrième et un cinquième dit sélecteur (46-4, 46-5), le troisième point de raccordement (52) qui est relié à un respectif des points de raccordement de la troisième paire, le deuxième point de raccordement (51) qui est relié à un point de raccordement correspondant du port (55A) dudit étage (24) du réseau informatique local et le premier point de raccordement (50) qui est relié audit étage (22) de téléphonie ;
avec ledit organe de pilotage (48) qui :
- dans la configuration de démarrage (61), met le premier sélecteur (46-2) dans ladite première position et met les deuxième à cinquième sélecteurs (46-4, 46-5, 46-7, 46-8) dans la deuxième position ;
- dans la première configuration de fonctionnement (63), met les premier à cinquième sélecteurs (46-2, 46-4, 46-5, 46-7, 46-8) dans ta deuxième position ; et
- dans la deuxième configuration de fonctionnement (68), met les premier à cinquième sélecteurs (46-2, 46-4, 46-5, 46-7, 46-8) dans la première position.

12. Système selon l'une quelconque des revendications 10 ou 11, **caractérisé en ce que** pour distribuer en outre des signaux de contrôle commande du bâtiment, il comporte une quatrième borne de connexion (18) à deux points de raccordement, adaptée à recevoir un câble (14) de contrôle commande du bâtiment et un étage (24) de contrôle commande du bâtiment, avec dans la deuxième configuration de fonctionnement (68) une quatrième paire de deux points de raccordement, prédéterminés parmi lesdits huit points de raccordement et distincts des points de raccordement des première paire à troisième paire, qui est reliée audit étage (22) de contrôle commande du bâtiment.

13. Système selon la revendication 12, **caractérisé en ce que** lesdits moyens de reconfiguration (46-2 - 46-8, 48) sont adaptés à faire prendre audit gestionnaire d'affectation (40) une configuration de démarrage (61) où ladite première paire de deux points de raccordement est réservée pour surveiller l'éventuelle présence d'un appareil de réseau informatique local (41) ; et **en ce que** lesdits moyens de reconfiguration (46-2 - 46-8, 48) comportent sept sélecteurs (46-2 - 46-8) et un organe de pilotage (48) desdits sélecteurs, lesquels sélecteurs comportent chacun un premier point de raccordement (50), un deuxième point de raccordement (51) et un troisième point de raccordement (52), admettent chacun une première position dans laquelle le premier point de raccordement (50) et le troisième point de raccordement (52) sont reliés l'un à l'autre tandis que le deuxième point de raccordement (51) et le troisième point de raccordement (52) sont isolés, et admettent une deuxième position dans laquelle le deuxième point de raccordement (51) et le troisième point de raccordement (52) sont reliés l'un à l'autre tandis que le premier point de raccordement (50) et le troisième point de raccordement (52) sont isolés l'un de l'autre, avec :
- une liaison permanente entre un premier point de raccordement de la première paire et le point de raccordement correspondant du port (55A) dudit étage (24) du réseau informatique local ;
- pour un premier dit sélecteur (46-2), le troisième point de raccordement (52) qui est relié au second point de raccordement de ladite première paire, le deuxième point de raccordement (51) qui est relié au point de raccordement correspondant du port (55A) dudit étage (24) du réseau informatique local et le premier point de raccordement (50) qui est relié à une source de tension (47) ;
- pour un deuxième et un troisième dit sélecteur (46-7, 46-8), le troisième point de raccordement (52) qui est relié à un respectif des points de raccordement de la deuxième paire, le deuxième point de raccordement (51) qui est relié à un point de raccordement correspondant du port (55A) dudit étage (24) du réseau informatique local et le premier point de raccordement (50) qui est relié audit étage (21) de traitement de signaux télévision ;
- pour un quatrième et un cinquième dit sélecteur (46-4, 46-5), le troisième point de raccordement (52) qui est relié à un respectif des points de raccordement de la troisième paire, le deuxième point de raccordement (51) qui est relié à un point de raccordement correspondant du port (55A) dudit étage (24) du réseau informatique local et le premier point de raccordement (50) qui est relié audit étage (22) de téléphonie ;
- pour un cinquième et un sixième dit sélecteur (46-3, 46-6), le troisième point de raccordement (52) qui est relié à un respectif des points de raccordement de la quatrième paire, le deuxième point de raccordement (51) qui est relié à un point de raccordement correspondant du port (55A) dudit étage (24) du réseau informatique local et le premier point de raccordement (50) qui est relié audit étage (23) de contrôle commande du bâtiment ;
avec ledit organe de pilotage (48) qui :
- dans la configuration de démarrage (61), met le premier sélecteur (46-2) dans ladite première position et met les deuxième à septième sélecteurs (46-3 - 46-8) dans la deuxième position ;
- dans la première configuration de fonctionnement (63), met les premier à septième sélecteurs (46-2 - 46-8) dans la deuxième position ; et
- dans la deuxième configuration de fonctionnement (68), met les premier à septième sélecteurs (46-2 - 46-8) dans la première position.

14. Système selon l'une quelconque des revendications 1 à 13, **caractérisé en ce que** lesdits moyens de reconfiguration (46-2 - 46-8, 48) sont adaptés à faire prendre audit gestionnaire d'affectation (40) une troisième configuration de fonctionnement (75) où la première paire de deux points de raccordement est reliée au port correspondant (55A) dudit étage (24) de réseau informatique local, la deuxième paire de deux points de raccordement est reliée audit étage (21 ; 22) de traitement de signaux d'une autre nature, et une troisième paire de deux points de raccordement, prédéterminés parmi lesdits huit points de raccordement et distincts des points de raccordement de la première paire et de la deuxième paire, est reliée au port correspondant (55A) dudit étage (24) de réseau informatique local.

15. Système selon l'une quelconque des revendications 7 ou 8, **caractérisé en ce que** lesdits moyens de reconfiguration (46-2 - 46-8, 48) sont adaptés à faire prendre audit gestionnaire d'affectation (40) une troisième configuration de fonctionnement (75) où la première paire de deux points de raccordement est reliée au port correspondant (55A) dudit étage (24) de réseau informatique local, la deuxième paire de deux points de raccordement est reliée audit étage (21 ; 22) de traitement de signaux d'une autre nature, et une troisième paire de deux points de raccordement, prédéterminés parmi lesdits huit points de raccordement et distincts des points de raccordement de la première paire et de la deuxième paire, est reliée au port correspondant (55A) dudit étage (24) de réseau informatique local ; et lesdits deuxièmes moyens de détection sont adaptés, en outre de détecter, dans ladite première configuration de fonctionnement (63), l'éventuelle présence de signaux de réseau informatique local, à déterminer, en cas de présence de tels signaux, s'ils sont d'une première ou d'une seconde nature ; et **en ce que** lesdits moyens de reconfiguration (46-2 - 46-8, 48) sont adaptés, à partir de la première configuration de fonctionnement (63), à rester dans la première configuration de fonctionnement (63) si lesdits deuxièmes moyens de détection (48, 58, 65, 71, 75) déterminent la présence de signaux de réseau informatique local de la première nature et à passer à la troisième configuration de fonctionnement (63) si lesdits deuxièmes moyens de détection (48, 58, 65, 71, 75) déterminent la présence de signaux de réseau informatique local de la seconde nature.

## Patentansprüche

1. System zum Verteilen wenigsten von lokalen Netzwerksignalen und Signalen einer anderen Art, wobei die Signale einer anderen Art entweder Fernsehsignale oder Telefoniesignale sind, mit:
- einer ersten Klemme (16; 17) mit zwei Anschlusspunkten, die ein Kabel (12, 13) zur Verteilung der Signale einer anderen Art aufzunehmen vermag;
- mehreren zweiten Klemmen (20A-20H) mit wenigstens acht Anschlusspunkten, wobei jede ein lokales Netzwerkkabel (15A-15H) aufzunehmen vermag;
- einer Stufe (21; 22) zur Verarbeitung der Signale einer anderen Art, die mit der ersten Klemme (16; 17) verbunden ist; und
- einer lokalen Netzwerkstufe (24), die für jede zweite Klemme (20A-20H) einen Verbindungsport (55A) mit wenigstens acht Anschlusspunkten aufweist;
**dadurch gekennzeichnet, dass** es ferner für jede zweite Klemme (20A) ein automatisches Zuweisungssteuerungsprogramm (40) umfasst, das Rekonfigurationsmittel (46-2 - 46-8, 48) aufweist, um selektiv:
- eine erste Betriebskonfiguration (63) einzunehmen, in der die acht Anschlusspunkte dieser zweiten Klemme (20A) mit dem entsprechenden Port (55A) der lokalen Netzwerkstufe (24) verbunden sind; und
- eine zweite Betriebskonfiguration (68) einzunehmen, in der ein erstes Adernpaar mit zwei unter den acht Anschlusspunkten dieser zweiten Klemme (20A) vorbestimmten Anschlusspunkten dazu vorgesehen ist, die mögliche Präsenz eines lokalen Netzwerkgerätes (41) zu überwachen; und in der ein zweites Adernpaar mit zwei unter den acht Anschlusspunkten der zweiten Klemme (20A) vorbestimmten und sich von den Anschlusspunkten des ersten Adernpaares unterscheidenden Anschlusspunkten mit der Stufe (21; 22) zur Verarbeitung der Signale einer anderen Art verbunden ist.

2. System nach Anspruch 1,
**dadurch gekennzeichnet, dass** die Rekonfigurationsmittel (46-2 - 46-8, 48) in der Lage sind, das Zuweisungssteuerungsprogramm (40) eine Start-Konfiguration (61) einnehmen zu lassen, in der das erste Adernpaar mit zwei Anschlusspunkten dazu vorgesehen ist, die mögliche Präsenz eines lokalen Netzwerkgerätes (41) zu überwachen.

3. System nach Anspruch 2,
**dadurch gekennzeichnet, dass** das Zuweisungssteuerungsprogramm (40) erste Erkennungsmittel (47, 48, 57, 62) umfasst, um in der Start-Konfiguration (61) und in der zweiten Betriebskonfiguration (68) die mögliche Präsenz eines lokalen Netzwerkgeräts (41) festzustellen.

4. System nach Anspruch 3,
**dadurch gekennzeichnet, dass** die ersten Erkennungsmittel umfassen:
- eine Steuereinrichtung (48) mit einem ersten Erkennungsanschlusspunkt (57), der mit einem ersten Anschlusspunkt des ersten Adernpaares verbunden ist, und mit Mitteln (62) um festzustellen, ob an dem ersten Erkennungsanschlusspunkt (57) eine Spannung auftritt; und
- eine Spannungsquelle (47), die in der Start-Konfiguration (61) und in der zweiten Betriebskonfiguration (68) mit dem zweiten Anschlusspunkt des ersten Adernpaares verbunden ist.

5. System nach einem der Ansprüche 2 bis 4,
**dadurch gekennzeichnet, dass** sich die Start-Konfiguration (61) von der zweiten Betriebskonfiguration (68) unterscheidet.

6. System nach Anspruch 5,
**dadurch gekennzeichnet, dass** in der Start-Konfiguration (61) unter den acht Anschlusspunkten sechs andere Anschlusspunkte als die des ersten Adernpaares mit dem Port (55A) der lokalen Netzwerkstufe (24) verbunden sind.

7. System nach einem der Ansprüche 5 oder 6,
**dadurch gekennzeichnet, dass** das Zuweisungssteuerungsprogramm (40) zweite Erkennungsmittel (48, 58, 65) umfasst, um die mögliche Präsenz lokaler Netzwerksignale in der ersten Betriebskonfiguration (63) festzustellen; und dass die Rekonfigurationsmittel (46-2 - 46-8, 48) in der Lage sind,
- ausgehend von der Start-Konfiguration (61) in die erste Betriebskonfiguration (63) zu wechseln, wenn die ersten Erkennungsmittel (47, 48, 57, 62) die Präsenz eines lokalen Netzwerkgerätes (41) feststellen, und ansonsten in die zweite Betriebskonfiguration (68) zu wechseln;
- ausgehend von der ersten Betriebskonfiguration (63) in der ersten Betriebskonfiguration (63) zu verbleiben, wenn die zweiten Erkennungsmittel (48, 58, 65) die Präsenz lokaler Netzwerksignale feststellen, und ansonsten in die Start-Konfiguration (61) zu wechseln; und
- ausgehend von der zweiten Betriebskonfiguration (68) in die erste Betriebskonfiguration (63) zu wechseln, wenn die ersten Erkennungsmittel (47, 48, 57, 62) die Präsenz eines lokalen Netzwerkgerätes (41) feststellen, und ansonsten in der zweiten Betriebskonfiguration (68) zu verbleiben.

8. System nach Anspruch 7,
**dadurch gekennzeichnet, dass** die zweiten Erkennungsmittel eine Steuereinrichtung (48) umfassen, die einen zweiten Erkennungsanschlusspunkt (58) umfasst, der mit einem Signalisierungsanschlusspunkt (56A) der lokalen Netzwerkstufe (24) verbunden ist, und Mittel (65) umfasst, um festzustellen, ob auf dem zweiten Erkennungsanschlussport (58) ein Signal auftritt, das auf die Präsenz lokaler Netzwerksignale hindeutet.

9. System nach einem der Ansprüche 2 bis 8,
**dadurch gekennzeichnet, dass** die Rekonfigurationsmittel wenigstens drei Selektoren (46-2 - 46-8) und eine Einrichtung (48) zum Steuern der Selektoren umfassen, wobei die Selektoren jeweils einen ersten Anschlusspunkt (50), einen zweiten Anschlusspunkt (51) und einen dritten Anschlusspunkt (52) aufweisen, jeweils eine erste Position zulassen, in der der erste Anschlusspunkt (50) und der dritte Anschlusspunkt (52) miteinander verbunden sind, während der zweite Anschlusspunkt (51) und der dritte Anschlusspunkt (52) voneinander getrennt sind, und eine zweite Position zulassen, in der der zweite Anschlusspunkt (51) und der dritte Anschlusspunkt (52) miteinander verbunden sind, während der erste Anschlusspunkt (50) und der dritte Anschlusspunkt (52) voneinander getrennt sind, wobei:
- zwischen einem ersten Anschlusspunkt des ersten Adernpaares und dem entsprechende Anschlusspunkt des Ports (55A) der lokalen Netzwerkstufe (24) eine ständige Verbindung besteht;
- bei einem ersten Selektor (46-2) der dritte Anschlusspunkt (52) mit dem zweiten Anschlusspunkt des ersten Adernpaares verbunden ist, der zweite Anschlusspunkt (51) mit dem entsprechenden Anschlusspunkt des Ports (55A) der lokalen Netzwerkstufe (24) verbunden ist und der erste Anschlusspunkt (50) mit einer Spannungsquelle (47) verbunden ist; und
- bei einem zweiten und einem dritten Selektor (46-4, 46-5, 46-7, 46-8) der dritte Anschlusspunkt (52) mit jeweils einem der Anschlusspunkte des zweiten Adernpaares verbunden ist, der zweite Anschlusspunkt (51) mit einem entsprechenden Anschlusspunkt des Ports (55A) der lokalen Netzwerkstufe (24) verbunden ist und der erste Anschlusspunkt (50) mit der Stufe (21; 22) zur Verarbeitung von Signalen einer anderen Art verbunden ist;
wobei die Steuereinrichtung (48):
- in der Start-Konfiguration (61) den ersten Selektor (46-2) in die erste Position bringt und den zweiten und dritten Selektor (46-4, 46-5, 46-7, 46-8) in die zweite Position bringt;
- in der ersten Betriebskonfiguration (63) den ersten, zweiten und dritten Selektor (46-2, 46-4, 46-5; 46-2, 46-7, 46-8) in die zweite Position bringt; und
- in der zweiten Betriebskonfiguration (68) den ersten, zweiten und dritten Selektor (46-2, 46-4, 46-5; 46-2, 46-7, 46-8) in die erste Position bringt.

10. System nach einem der Ansprüche 1 bis 9,
**dadurch gekennzeichnet, dass** die Signale einer anderen Art Fernsehsignale sind, und dass es ferner zum Verteilen von Telefoniesignalen eine dritte Klemme (17) mit zwei Anschlusspunkten umfasst, die ein Telefonverteilungskabel (13) und eine Telefoniestufe (22) aufzunehmen vermag, wobei in der zweiten Betriebskonfiguration (68) ein drittes Adernpaar mit zwei unter den acht Anschlusspunkten vorbestimmten und sich von den Anschlusspunkten des ersten Adernpaares und des zweiten Adernpaares unterscheidenden Anschlusspunkten mit der Telefoniestufe (22) verbunden ist.

11. System nach Anspruch 10,
**dadurch gekennzeichnet, dass** die Rekonfigurationsmittel (46-2 - 46-8, 48) in der Lage sind, das Zuweisungssteuerungsprogramm (40) eine Start-Konfiguration (61) einnehmen zu lassen, in der das erste Adernpaar mit zwei Anschlusspunkten dazu vorgesehen ist, die mögliche Präsenz eines lokalen Netzwerkgerätes (41) zu überwachen; und dass die Rekonfigurationsmittel (46-2 - 46-8, 48) wenigstens fünf Selektoren (46-2 - 46-8) und eine Einrichtung (48) zum Steuern der Selektoren umfassen, wobei die Selektoren jeweils einen ersten Anschlusspunkt (50), einen zweiten Anschlusspunkt (51) und einen dritten Anschlusspunkt (52) aufweisen, jeweils eine erste Position zulassen, in der der erste Anschlusspunkt (50) und der dritte Anschlusspunkt (52) miteinander verbunden sind, während der zweite Anschlusspunkt (51) und der dritte Anschlusspunkt (52) voneinander getrennt sind, und eine zweite Position zulassen, in der der zweite Anschlusspunkt (51) und der dritte Anschlusspunkt (52) miteinander verbunden sind, während der erste Anschlusspunkt (50) und der dritte Anschlusspunkt (52) voneinander getrennt sind, wobei:
- zwischen einem ersten Anschlusspunkt des ersten Adernpaares und dem entsprechenden Anschlusspunkt des Ports (55A) der lokalen Netzwerkstufe (24) eine ständige Verbindung besteht;
- bei einem ersten Selektor (46-2) der dritte Anschlusspunkt (52) mit dem zweiten Anschlusspunkt des ersten Adernpaares verbunden ist, der zweite Anschlusspunkt (51) mit dem entsprechenden Anschlusspunkt des Ports (55A) der lokalen Netzwerkstufe (24) verbunden ist und der erste Anschlusspunkt (50) mit einer Spannungsquelle (47) verbunden ist;
- bei einem zweiten und einem dritten Selektor (46-7, 46-8) der dritte Anschlusspunkt (52) mit jeweils einem der Anschlusspunkte des zweiten Adernpaares verbunden ist, der zweite Anschlusspunkt (51) mit einem entsprechenden Anschlusspunkt des Ports (55A) der lokalen Netzwerkstufe (24) verbunden ist und der erste Anschlusspunkt (50) mit der Stufe (21; 22) zur Verarbeitung von Fernsehsignalen verbunden ist; und
- bei einem vierten und einem fünften Selektor (46-4, 46-5) der dritte Anschlusspunkt (52) mit jeweils einem der Anschlusspunkte des dritten Adernpaares verbunden ist, der zweite Anschlusspunkt (51) mit einem entsprechenden Anschlusspunkt des Ports (55A) der lokalen Netzwerkstufe (24) verbunden ist und der erste Anschlusspunkt (50) mit der Telefoniestufe (22) verbunden ist;
wobei die Steuereinrichtung (48):
- in der Start-Konfiguration (61) den ersten Selektor (46-2) in die erste Position bringt und den zweiten bis fünften Selektor (46-4, 46-5, 46-7, 46-8) in die zweite Position bringt;
- in der ersten Betriebskonfiguration (63) den ersten bis fünften Selektor (46-2, 46-4, 46-5, 46-7, 46-8) in die zweite Position bringt; und
- in der zweiten Betriebskonfiguration (68) den ersten bis fünften Selektor (46-2, 46-4, 46-5, 46-7, 46-8) in die erste Position bringt.

12. System nach einem der Ansprüche 10 oder 11,
**dadurch gekennzeichnet, dass** es zudem zur Verteilung von Gebäudesteuerungssignalen eine vierte Klemme (18) mit zwei Anschlusspunkten umfasst, die ein Gebäudesteuerungskabel (14) und eine Gebäudesteuerungsstufe (24) aufzunehmen vermag, wobei in der zweiten Betriebskonfiguration (68) ein viertes Adernpaar mit zwei unter den acht Anschlusspunkten vorbestimmten und sich von den Anschlusspunkten des ersten Adernpaares bis dritten Adernpaares unterscheidenden Anschlusspunkten mit der Gebäudesteuerungsstufe (22) verbunden ist.

13. System nach Anspruch 12,
**dadurch gekennzeichnet, dass** die Rekonfigurationsmittel (46-2 - 46-8, 48) in der Lage sind, das Zuweisungssteuerungsprogramm (40) eine Start-Konfiguration (61) einnehmen zu lassen, in der das erste Adernpaar mit zwei Anschlusspunkten dazu vorgesehen ist, die mögliche Präsenz eines lokalen Netzwerkgeräts (41) zu überwachen; und dass die Rekonfigurationsmittel (46-2 - 46-8, 48) sieben Selektoren (46-2 - 46-8) und eine Einrichtung (48) zur Steuerung der Selektoren umfassen, wobei die Selektoren jeweils einen ersten Anschlusspunkt (50), einen zweiten Anschlusspunkt (51) und einen dritten Anschlusspunkt (52) aufweisen, jeweils eine erste Position zulassen, in der der erste Anschlusspunkt (50) und der dritte Anschlusspunkt (52) miteinander verbunden sind, während der zweite Anschlusspunkt (51) und der dritte Anschlusspunkt (52) voneinander getrennt sind, und eine zweite Position zulassen, in der der zweite Anschlusspunkt (51) und der dritte Anschlusspunkt (52) miteinander verbunden sind, während der erste Anschlusspunkt (50) und der dritte Anschlusspunkt (52) voneinander getrennt sind, wobei
- zwischen einem ersten Anschlusspunkt des ersten Adernpaares und dem entsprechenden Anschlusspunkt des Ports (55A) der lokalen Netzwerkstufe (24) eine ständige Verbindung besteht;
- bei einem ersten Selektor (46-2) der dritte Anschlusspunkt (52) mit dem zweiten Anschlusspunkt des ersten Adernpaares verbunden ist, der zweite Anschlusspunkt (51) mit dem entsprechenden Anschlusspunkt des Ports (55A) der lokalen Netzwerkstufe (24) verbunden ist und der erste Anschlusspunkt (50) mit einer Spannungsquelle (47) verbunden ist;
- bei einem zweiten und einem dritten Selektor (46-7, 46-8) der dritte Anschlusspunkt (52) mit jeweils einem der Anschlusspunkte des zweiten Adernpaares verbunden ist, der zweite Anschlusspunkt (51) mit einem entsprechenden Anschlusspunkt des Ports (55A) der lokalen Netzwerkstufe (24) verbunden ist und der erste Anschlusspunkt (50) mit der Stufe (21) zur Verarbeitung von Fernsehsignalen verbunden ist;
- bei einem vierten und einem fünften Selektor (46-4, 46-5) der dritte Anschlusspunkt (52) mit jeweils einem der Anschlusspunkte des dritten Adernpaares verbunden ist, der zweite Anschlusspunkt (51) mit einem entsprechenden Anschlusspunkt des Ports (55A) der lokalen Netzwerkstufe (24) verbunden ist und der erste Anschlusspunkt (50) mit der Telefoniestufe (22) verbunden ist;
- bei einem fünften und einem sechsten Selektor (46-3, 46-6) der dritte Anschlusspunkt (52) mit jeweils einem der Anschlusspunkte des vierten Adernpaares verbunden ist, der zweite Anschlusspunkt (51) mit einem entsprechenden Anschlusspunkt des Ports (55A) der lokalen Netzwerkstufe (24) verbunden ist und der erste Anschlusspunkt (50) mit der Gebäudesteuerungsstufe (22) verbunden ist;
wobei die Steuereinrichtung (48)
- in der Start-Konfiguration (61) den ersten Selektor (46-2) in die erste Position bringt und den zweiten bis siebten Selektor (46-3 - 46-8) in die zweite Position bringt;
- in der ersten Betriebskonfiguration (63) den ersten bis siebten Selektor (46-2-46-8) in die zweite Position bringt; und
- in der zweiten Betriebskonfiguration (68) den ersten bis siebten Selektor (46-2-46-8) in die erste Position bringt.

14. System nach einem der Ansprüche 1 bis 13,
**dadurch gekennzeichnet, dass** die Rekonfigurationsmittel (46-2 - 46-8, 48) in der Lage sind, das Zuweisungssteuerungsprogramm (40) eine dritte Betriebskonfiguration (75) einnehmen zu lassen, in der das erste Adernpaar mit zwei Anschlusspunkten mit dem entsprechenden Port (55A) der lokalen Netzwerkstufe (24) verbunden ist, das zweite Adernpaar mit zwei Anschlusspunkten mit der Stufe (21; 22) zur Verarbeitung von Signalen einer anderen Art verbunden ist und ein drittes Adernpaar mit zwei unter den acht Anschlusspunkten vorbestimmten und sich von den Anschlusspunkten des ersten Adernpaares und des zweiten Adernpaares unterscheidenden Anschlusspunkten mit dem entsprechenden Port (55A) der lokalen Netzwerkstufe (24) verbunden ist.

15. System nach einem der Ansprüche 7 oder 8,
**dadurch gekennzeichnet, dass** die Rekonfigurationsmittel (46-2 - 46-8, 48) in der Lage sind, das Zuweisungssteuerungsprogramm (40) eine dritte Betriebskonfiguration (75) einnehmen zu lassen, in der das erst Adernpaar mit zwei Anschlusspunkten mit dem entsprechenden Port (55A) der lokalen Netzwerkstufe (24) verbunden ist, das zweite Adernpaar mit zwei Anschlusspunkten mit der Stufe (21; 22) zur Verarbeitung von Signalen einer anderen Art verbunden ist und ein drittes Adernpaar mit zwei unter den acht Anschlusspunkten vorbestimmten und sich von den Anschlusspunkten des ersten Adernpaares und des zweiten Adernpaares unterscheidenden Anschlusspunkten mit dem entsprechenden Port (55A) der lokalen Netzwerkstufe (24) verbunden ist; und die zweiten Erkennungsmittel in der Lage sind, außer in der ersten Betriebskonfiguration (63) die mögliche Präsenz lokaler Netzwerksignale zu erkennen, im Falle der Präsenz derartiger Signale festzustellen, ob diese von einer ersten oder einer zweiten Art sind; und dass die Rekonfigurationsmittel (46-2 - 46-8, 48) in der Lage sind, ausgehend von der ersten Betriebskonfiguration (63) in der ersten Betriebskonfiguration (63) zu verbleiben, wenn die zweiten Erkennungsmittel (48, 58, 65, 71, 75) die Präsenz lokaler Netzwerksignale der ersten Art feststellen, und in die dritte Betriebskonfiguration (63) zu wechseln, wenn die zweiten Erkennungsmittel (48, 58, 65, 71, 75) die Präsenz lokaler Netzwerksignale der zweiten Art feststellen.

## Claims

1. A system for distributing at least local data network signals and signals of another nature, which signals of another nature are either television signals or telephony signals, comprising:
- a first connection terminal (16; 17) with two connecting points, which is adapted to receive a cable (12; 13) for distribution of said signals of another nature;
- a plurality of second connection terminals (20A-20H) with at least eight connecting points, each being adapted to receive a local data network cable (15A-15H);
- a stage (21; 22) for processing of said signals of another nature, which is connected to said first connection terminal (16; 17); and
- a local data network stage (24) comprising for each said second connection terminal (20A-20H) a connection port (55A) having at least eight connecting points;
**characterised in that** it further comprises, for each said second connection terminal (20A) an automatic assignment manager (40) comprising re-configuration means (46-2 - 46-8, 48) for selectively assuming:
- a first operating configuration (63) in which said eight connecting points of said second connection terminal (20A) are connected to the corresponding port (55A) of said local data network stage (24); and
- a second operating configuration (68) in which a first pair of two connecting points which are predetermined among said eight connecting points of said second connection terminal (20A) is reserved for monitoring the possible presence of a local data network device (41); and in which a second pair of two connecting points which are predetermined among said eight connecting points of said second connection terminal (20A) and distinct from the connecting points of the first pair is connected to said stage (21; 22) for processing signals of another nature.

2. A system according to claim 1 **characterised in that** said reconfiguration means (46-2 - 46-8, 48) are adapted to cause said assignment manager (40) to assume a startup configuration (61) in which said first pair of two connecting points is reserved for monitoring the possible presence of a local data network device (41).

3. A system according to claim 2 **characterised in that** said assignment manager (40) comprises first detection means (47, 48, 57, 62) for detecting in said startup configuration (61) and in said second operating configuration (68) the possible presence of a local data network device (41).

4. A system according to claim 3 **characterised in that** said first detection means comprise:
- a pilot control member (48) comprising a first detection connecting point (57) connected to a first connecting point of the first pair and comprising means (62) for determining if a voltage appears at the first detection connecting point (57); and
- a voltage source (47) connected in said startup configuration (61) and in said second operating configuration (68) to the second connecting point of said first pair.

5. A system according to any one of claims 2 to 4 **characterised in that** said startup configuration (61) is distinct from said second operating configuration (68).

6. A system according to claim 5 **characterised in that** in said startup configuration (61), among said eight connecting points, the six connecting points other than those of said first pair are connected to the port (55A) of said local data network stage (24).

7. A system according to either one of claims 5 and 6 **characterised in that** said assignment manager (40) comprises second detection means (48, 58, 65) for detecting in said first operating configuration (63) the possible presence of local data network signals; and that said reconfiguration means (46-2 - 46-8, 48) are adapted:
- from the startup configuration (61) to go to the first operating configuration (63) if said first detection means (47, 48, 57, 62) determine the presence of a local data network device (41) and if not to go to the second operating configuration (68);
- from the first operating configuration (63) to remain in the first operating configuration (63) if said second detection means (48, 58, 65) determine the presence of local data network signals and if not to go to the startup configuration (61); and
- from the second operating configuration (68) to go to the first operating configuration (63) if the first detection means (47, 48, 57, 62) determine the presence of a local data network device (41) and if not remain in the second operating configuration (68).

8. A system according to claim 7 **characterised in that** said second detection means comprise a pilot control member (48) comprising a second detection connecting point (58) connected to a signalling connecting point (56A) of said local data network stage (24) and comprising means (65) for determining if a local data network signal presence signal appears at said second detection connecting point (58).

9. A system according to any one of claims 2 to 8 **characterised in that** said re-configuration means comprise at least three selectors (46-2 - 46-8) and a pilot control member (48) for said selectors, which selectors each comprise a first connecting point (50), a second connecting point (51) and a third connecting point (52), each admit a first position in which the first connecting point (50) and the third connecting point (52) are connected to each other while the second connecting point (51) and the third connecting point (52) are isolated, and admit a second position in which the second connecting point (51) and the third connecting point (52) are connected to each other while the first connecting point (50) and the third connecting point (52) are isolated from each other, with:
- a permanent connection between a first connecting point of the first pair and the corresponding connecting point of the port (55A) of said stage (24) of the local data network;
- for a first said selector (46-2) the third connecting point (52) which is connected to the second connecting point of said first pair, the second connecting point (51) which is connected to the corresponding connecting point of the port (55A) of said stage (24) of the local data network and the first connecting point (50) which is connected to a voltage source (47); and
- for a second and a third said selector (46-4, 46-5; 46-7, 46-8) the third connecting point (52) which is connected to a respective one of the connecting points of the second pair, the second connecting point (51) which is connected to a corresponding connecting point of the port (55A) of said stage (24) of the local data network and the first connecting point (50) which is connected to the stage (21; 22) for processing of signals of another nature;
with said pilot control member (48) which:
- in the startup configuration (61) puts the first selector (46-2) in said first position and puts the second and third selectors (46-4, 46-5; 46-7, 46-8) in the second position;
- in the first operating configuration (63) puts the first, second and third selectors (46-2, 46-4, 46-5; 46-2, 46-7, 46-8) in the second position; and
- in the second operating configuration (68) puts the first, second and third selectors (46-2, 46-4, 46-5; 46-2, 46-7, 46-8) in the first position.

10. A system according to any one of claims 1 to 9 **characterised in that** said signals of another nature are television signals and that for also distributing telephony signals it comprises a third connection terminal (17) with two connecting points, which is adapted to receive a cable (13) for distribution of the telephony and a telephony stage (22), with in the second operating configuration (68) a third pair of two connecting points, which are predetermined among said eight connecting points and distinct from the connecting points of the first pair and the second pair, which is connected to said telephony stage (22).

11. A system according to claim 10 **characterised in that** said reconfiguration means (46-2 - 46-8, 48) are adapted to cause said assignment manager (40) to assume a startup configuration (61) in which said first pair of two connecting points is reserved for monitoring the possible presence of a local data network device (41); and that said reconfiguration means (46-2 - 46-8, 48) comprise at least five selectors (46-2 - 46-8) and a pilot control member (48) for said selectors, which selectors each comprise a first connecting point (50), a second connecting point (51) and a third connecting point (52), each admit a first position in which the first connecting point (50) and the third connecting point (52) are connected to each other while the second connecting point (51) and the third connecting point (52) are isolated, and admit a second position in which the second connecting point (51) and the third connecting point (52) are connected to each other while the first connecting point (50) and the third connecting point (52) are isolated from each other, with:
- a permanent connection between a first connecting point of the first pair and the corresponding connecting point of the port (55A) of said stage (24) of the local data network;
- for a first said selector (46-2) the third connecting point (52) which is connected to the second connecting point of said first pair, the second connecting point (51) which is connected to the corresponding connecting point of the port (55A) of said stage (24) of the local data network and the first connecting point (50) which is connected to a voltage source (47); and
- for a second and a third said selector (46-7, 46-8) the third connecting point (52) which is connected to a respective one of the connecting points of the second pair, the second connecting point (51) which is connected to a corresponding connecting point of the port (55A) of said stage (24) of the local data network and the first connecting point (50) which is connected to said stage (21) for processing of television signals;
- for a fourth and a fifth said selector (46-4, 46-5) the third connecting point (52) which is connected to a respective one of the connecting points of the third pair, the second connecting point (51) which is connected to a corresponding connecting point of the port (55A) of said stage (24) of the local data network and the first connecting point (50) which is connected to said telephony stage (22);
with said pilot control member (48) which:
- in the startup configuration (61) puts the first selector (46-2) in said first position and puts the second to fifth selectors (46-4, 46-5; 46-7, 46-8) in the second position;
- in the first operating configuration (63) puts the first to fifth selectors (46-2, 46-4, 46-5; 46-2, 46-7, 46-8) in the second position; and
- in the second operating configuration (68) puts the first to fifth selectors (46-2, 46-4, 46-5; 46-2, 46-7, 46-8) in the first position.

12. A system according to either one of claims 10 and 11 **characterised in that** for also distributing management control signals for the building it comprises a fourth connection terminal (18) with two connecting points, which is adapted to receive a cable (14) for control management of the building and a stage (24) for control management of the building, with in the second operating configuration (68) a fourth pair of two connecting points, which are predetermined among said eight connecting points and distinct from the connecting points of the first pair to third pair, which is connected to said stage (22) for control management of the building.

13. A system according to claim 12 **characterised in that** said reconfiguration means (46-2 - 46-8, 48) are adapted to cause said assignment manager (40) to assume a startup configuration (61) in which said first pair of two connecting points is reserved for monitoring the possible presence of a local data network device (41); and that said reconfiguration means (46-2 - 46-8, 48) comprise seven selectors (46-2 - 46-8) and a pilot control member (48) for said selectors, which selectors each comprise a first connecting point (50), a second connecting point (51) and a third connecting point (52), each admit a first position in which the first connecting point (50) and the third connecting point (52) are connected to each other while the second connecting point (51) and the third connecting point (52) are isolated, and admit a second position in which the second connecting point (51) and the third connecting point (52) are connected to each other while the first connecting point (50) and the third connecting point (52) are isolated from each other, with:
- a permanent connection between a first connecting point of the first pair and the corresponding connecting point of the port (55A) of said stage (24) of the local data network;
- for a first said selector (46-2) the third connecting point (52) which is connected to the second connecting point of said first pair, the second connecting point (51) which is connected to the corresponding connecting point of the port (55A) of said stage (24) of the local data network and the first connecting point (50) which is connected to a voltage source (47);
- for a second and a third said selector (46-7, 46-8) the third connecting point (52) which is connected to a respective one of the connecting points of the second pair, the second connecting point (51) which is connected to a corresponding connecting point of the port (55A) of said stage (24) of the local data network and the first connecting point (50) which is connected to said stage (21) for processing of television signals;
- for a fourth and a fifth said selector (46-4, 46-5) the third connecting point (52) which is connected to a respective one of the connecting points of the third pair, the second connecting point (51) which is connected to a corresponding connecting point of the port (55A) of said stage (24) of the local data network and the first connecting point (50) which is connected to said telephony stage (22);
- for a fifth and a sixth said selector (46-3, 46-6) the third connecting point (52) which is connected to a respective one of the connecting points of the fourth pair, the second connecting point (51) which is connected to a corresponding connecting point of the port (55A) of said stage (24) of the local data network and the first connecting point (50) which is connected to said stage (23) for control management of the building;
with said pilot control member (48) which:
- in the startup configuration (61) puts the first selector (46-2) in said first position and puts the second to seventh selectors (46-3 - 46-8) in the second position;
- in the first operating configuration (63) puts the first to seventh selectors (46-2 - 46-8) in the second position; and
- in the second operating configuration (68) puts the first to seventh (46-2 - 46-8) in the first position.

14. A system according to any one of claims 1 to 13 **characterised in that** said re-configuration means (46-2 - 46-8, 48) are adapted to cause said assignment manager (40) to assume a third operating configuration (75 in which the first pair of two connecting points is connected to the corresponding port (55A) of said local data network stage (24), the second pair of two connecting points is connected to said stage (21; 22) for processing of signals of another nature, and a third pair of two connecting points which are predetermined among said eight connecting points and distinct from the connecting points of the first pair and the second pair is connected to the corresponding port (55A) of said local data network stage (24).

15. A system according to either one of claims 7 and 8 **characterised in that** said re-configuration means (46-2 - 46-8, 48) are adapted to cause said assignment manager (40) to assume a third operating configuration (75 in which the first pair of two connecting points is connected to the corresponding port (55A) of said local data network stage (24), the second pair of two connecting points is connected to said stage (21; 22) for processing of signals of another nature, and a third pair of two connecting points which are predetermined among said eight connecting points and distinct from the connecting points of the first pair and the second pair is connected to the corresponding port (55A) of said local data network stage (24); and said second detection means are adapted also to detect in said first operating configuration (63) the possible presence of local data network signals, to determine in the case of the presence of such signals if they are of a first or a second nature; and that said re-configuration means (46-2 - 46-8, 48) are adapted from the first operating configuration (63) to remain in the first operating configuration (63) if said second detection means (48, 58, 65, 71, 75) determine the presence of local data network signals of the first nature and to go to the third operating configuration (63) if said second detection means (48, 58, 65, 71, 75) determine the presence of local data network signals of the second nature.
